# EUROPEAN PATENT SPECIFICATION

(11) **EP 1 402 765 B1**
(45) Date of publication and mention of the grant of the patent: **25.04.2012**
(21) Application number: 03017841.2
(22) Date of filing: 05.08.2003
(51) Int. Cl.: A01C 7/04

(54) **Precision sowing machine and relative anchorage system for holed disks**
Präzisionssämaschine und relatives Verankerungssystem für gelochte Scheiben
Machine à ensemencer de précision et système d'ancrage relatif pour disques perforés

(30) Priority: 09.08.2002 IT UD20020178
(43) Date of publication of application: 31.03.2004
(73) Proprietor: NARDI S.p.A., 06016 Sangiustino (PG) (IT); Maquinaria Agricola Solà, S.L., 08280 Calaf Barcelona (ES)
(72) Inventor: Turchetto Alfredo, 33080 Roveredo in Piano (PN) (IT)
(74) Representative: Petraz, Gilberto Luigi

(56) References cited:
- EP-A- 1 031 266
- DE-A- 2 011 462

## Description

### FIELD OF THE INVENTION

The present invention concerns a sowing machine which has an anchorage system for holed disks, suitable for the selective and distanced precision sowing of seeds, said anchorage being provided on the distribution bell.

### BACKGROUND OF THE INVENTION

Precision sowing machines are known, both of the mechanical and pneumatic type, for the distribution of seeds.

Such sowing machines, particularly those of a pneumatic type, house the distribution bell between the distribution cover and the small distribution body, said distribution bell being associated with the holed disk, which allows the selective passage of the seeds between the zone where they are introduced and the zone where they are released.

Said disks include specific holes, substantially the holes are normally provided in a circular position and can be of various sizes.

In precision sowing one of the main problems is to adapt the holed disk, every time that the seed to be distributed on the cultivated ground is replaced, since the holes of the disk have to be coherent with the size and characteristics of the seed.

The state of the art includes many solutions both of holed disks, and also of anchorage systems for said disks.

As far as the present invention is concerned, all known anchorage systems require from the operator a long time and a lot of work to replace the holed disk.

It should be noted that a sowing machine has numerous sowing heads and a big production capacity, so that the holed disks can be changed even several times a day.

EP-A-1.031.266 discloses a seed delivery device wherein a sorter holed disk is fastened to a respective rotating drum by means of fastening mechanical means, indicated with B, C, D and E. Magnetic means are used to keep the sorter disc against a sorting plate, and to make adhere a plurality of pads to the sorter disc itself, but not to couple the sorter disc to the relative drum or to the bell-like holder. Therefore, in order to change the sorter disk it is needed to remove the fastening mechanical means.

The present invention intends to solve the problems mentioned above with a new anchorage system for holed disks.

### SUMMARY OF THE INVENTION

The present invention is set forth and characterized in claim 1, while the dependent claims describe other characteristics of the invention.

According to a first embodiment, said magnetic element is provided in the peripheral edge of the distribution bell/holed disk.

According to another variant, said magnetic element can be provided both inside said peripheral edge and also on the surface, that is, flush with said peripheral edge.

According to another variant of the present invention, the distribution bell has means that allow the holed disk to be easily centered at the moment it is positioned.

Said means can cooperate with mating means present on the holed disk.

In a preferential embodiment said means consist of at least a pin element and at least a corresponding housing seating.

According to another variant, the pin element is provided in the peripheral edge of the distribution bell.

According to another variant, on the peripheral edge of the distribution bell at least a packing is provided which facilitates the hermetic seal of the holed disk once it is anchored to the distribution bell.

According to another variant of the present invention, in the edge of the distribution bell means are provided that, cooperating with corresponding means provided in the edge of the small distribution body, make it easier to grip and handle the holed disk both in the anchoring step and also in the detachment step.

### BRIEF DESCRIPTION OF THE DRAWINGS

These characteristics and advantages of the invention will become apparent from the following description of a preferential embodiment, given as a non-restrictive example, with reference to the attached drawings wherein:
- fig. 1 shows a sowing head viewed from the outside and without the various means and movements;
- fig. 2 shows the sowing head in fig. 1 without the distribution cover and the holed disk;
- fig. 3 shows the sowing head in fig. 1 with a holed disk anchored to the distribution bell;
- fig. 4 shows a holed disk according to the invention;
- fig. 5 shows a part section of the holed disk according to the invention.

### DETAILED DESCRIPTION OF THE PREFERENTIAL EMBODIMENT OF THE INVENTION

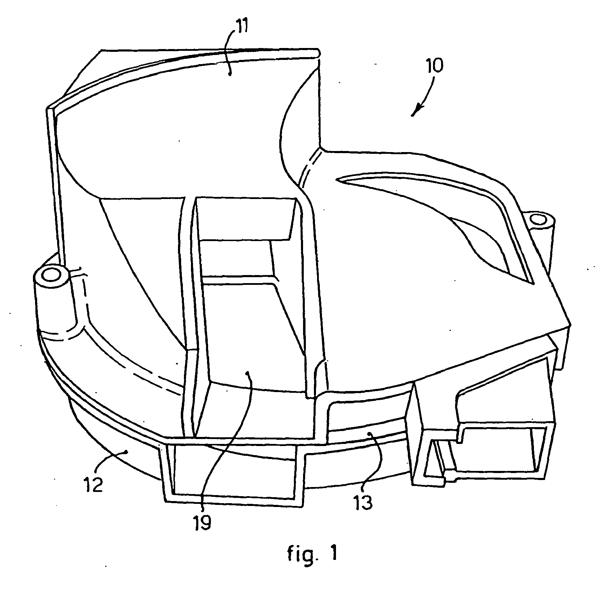

Fig. 1 shows the body 10 of a sowing machine according to the invention wherein, from top to bottom, the distribution cover 11, the small distribution body 12 and the holed disk 19 are visible.

The holed disk 19 is operatively associated with the distribution bell 13.

In fig. 1 neither the motion members nor the suction system nor the parts not pertaining to the invention are visible.

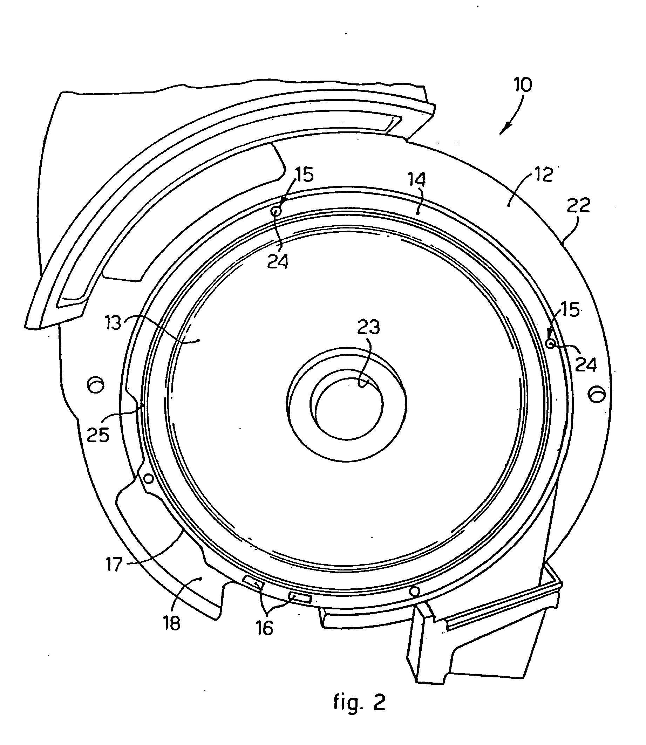

Fig. 2 shows the body 10 of the sowing machine according to fig. 1 without the distribution cover 11 and the holed disk 19 wherein the small distribution body 12 is visible, with the relative peripheral edge 22, inside which the rotary distribution bell 13 is housed, with the relative peripheral edge 14.

The peripheral edge 14, according to the invention, can be replaced by other geometric formulations.

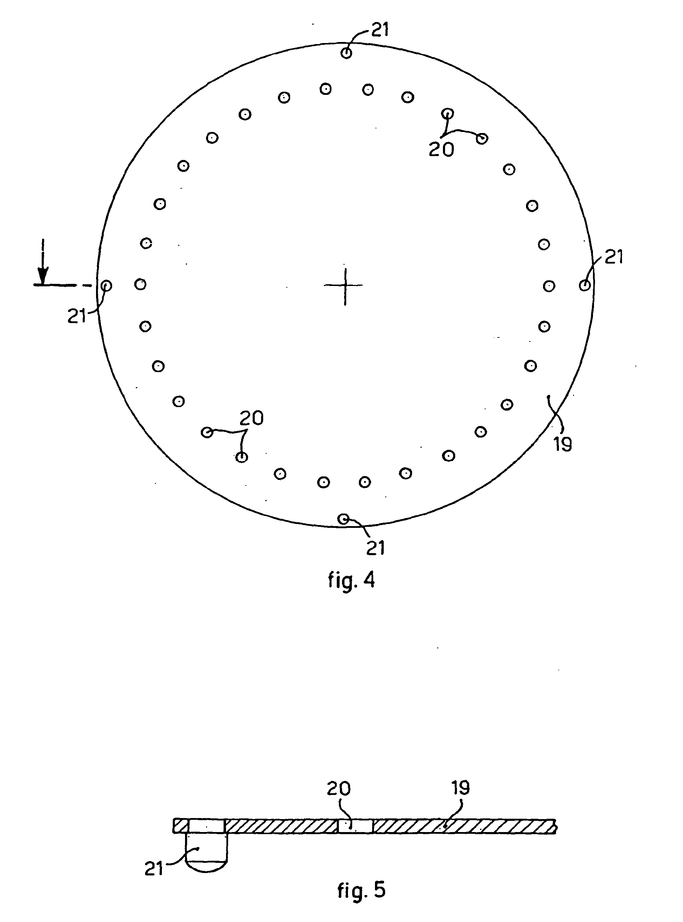

The small distribution body 12 houses and contains the distribution bell 13 in axis with the central hole 23 by which the air is sucked in. When the holed disk 19 is anchored to the distribution bell 13, said air creates the depressurization necessary so that the seeds are positioned in a known manner in the holes 20 of the holed disk 19 (fig. 4).

In the peripheral edge 14 both the magnetic elements 16 and also the centering means 15 are visible.

The centering means 15 consist of pin elements 21 and housing seatings 24 for the pin elements 21.

On the peripheral edge 14 there is also at least a lead-in 17 with a corresponding seating 18 located on the of the small distribution body 12.

When the lead-in 17 is in correspondence with the seating 18 an interstice is created, which is large enough to facilitate the handling of the holed disk 19 both in the anchoring step and also in the detachment step.

Moreover, in the peripheral edge 14 there is a packing 25 able to facilitate the hermetic seal of the holed disk 19 when it is anchored to the distribution bell 13.

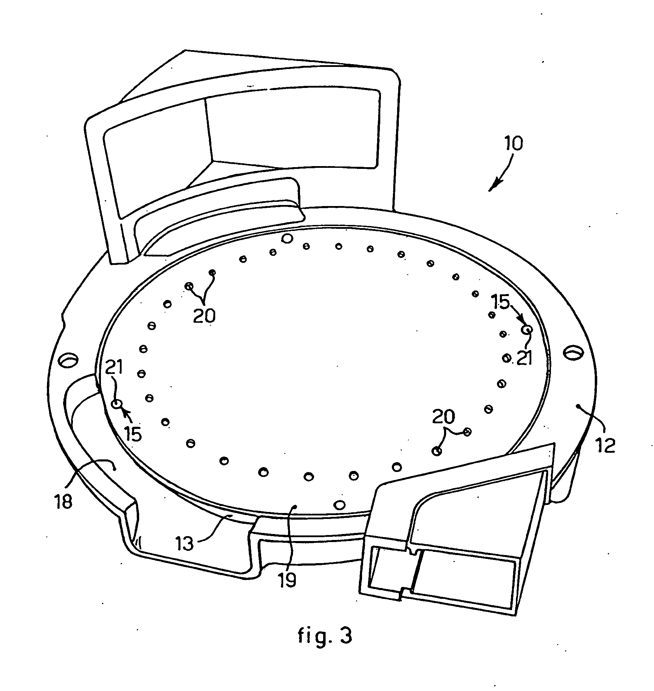

Fig. 3 shows a holed disk 19 associated in axis with the distribution bell 13, having suitable holes 20; the holes 20 are coherent with the type of seed which on different occasions is used for sowing.

Finally, fig. 4 shows the holed disk 19 from the side with which it couples with the distribution bell 13.

This figure shows on the holed disk 19 not only the suitable holes 20 but also the pin elements 21 which, cooperating with the housing seatings 24, are able to center the holed disk 19 on the distribution bell 13.

The pin elements 21 are shown better in the part section of the holed disk 19 in fig. 5.

## Claims

1. Precision sowing machine having a body (10) consisting of a distribution cover (11), a small distribution body (12) containing a distribution bell (13) with which at least a holed disk (19) is associated, the whole in axis with a central hole (23) to suck in the air, **characterized in that** said distribution bell (13) and said holed disk (19) are associated thanks to the collaboration of at least a magnetic element (16) provided in one of either said distribution bell (13) and said holed disk (19) with at least an element made of magneto-sensitive material provided in the other of either said distribution bell (13) and said holed disk (19), wherein a packing (25) is present in a peripheral edge (14) of said rotary distribution bell (13) radially inwardly of said magnetic element (16) or inwardly of said magneto-sensitive element.

2. Sowing machine as in claim 1, **characterized in that** said magnetic element (16) is located in said distribution bell (13) and said magneto-sensitive element is present in said holed disk (19).

3. Sowing machine as in claim 1, **characterized in that** said magneto-sensitive element is present in said distribution bell (13).

4. Sowing machine as in claim 1 or 2, **characterized in that** said magnetic element (16) is present in the peripheral edge (14) of said distribution bell (13).

5. Sowing machine as in claim 1 or 2, **characterized in that** said magnetic element (16) is located inside the peripheral edge (14) of said distribution bell (13).

6. Sowing machine as in claim 1 or 2, **characterized in that** said magnetic element (16) is positioned flush with the peripheral edge (14) of said distribution bell (13).

7. Sowing machine as in any claim hereinbefore, **characterized in that** between said distribution bell (13) and said holed disk (19) there are mating centering means (15).

8. Sowing machine as in claim 7, **characterized in that** said centering means (15) consist of at least a pin element (21) and at least a corresponding housing seating (24).

9. Sowing machine as in any claim hereinbefore, **characterized in that** said distribution bell (13) has at least a lead-in (17).

10. Sowing machine as in any claim hereinbefore, **characterized in that** said small distribution body (12) has at least a seating (18).

## Patentansprüche

1. Präzisionssähmaschine mit einem Körper (10) bestehend aus einem Verteildeckel (11), einem kleinen Verteilkörper (12), beinhaltend eine Verteilglocke (13) mit welchem zumindest eine gelochte Scheibe (19) verbunden ist, das Ganze auf einer Achse mit einem zentralen Loch (23) um Luft einzusaugen, **dadurch gekennzeichnet, dass** die besagte Verteilglocke (13) und die besagte gelochte Scheibe (19) wegen des Zusammenwirkens zumindest eines magnetischen Elementes (16), welches in einem von entweder der besagten Verteilglocke (13) oder der besagten gelochten Scheibe (19) angeordnet ist, mit zumindest einem Element aus mangnetempfindlichem Material, welches in dem anderen von entweder der besagten Verteilglocke (13) oder der besagten gelochten Scheibe (19) angeordnet ist, in Verbindung stehen, wobei eine Dichtung (25) entlang einer Umfangskante (14) der besagten rotierenden Verteilglocke (13) radial innerhalb vom besagten magnetischen Element (16) oder innerhalb vom besagten magnetempfindlichen Element angeordnet ist.

2. Sähmaschine nach Anspruch 1, **dadurch gekennzeichnet, dass** das besagte magnetische Element (16) in der besagten Verteilglocke (13) angeordnet ist und dass das besagte magnetempfindliche Element in der besagten gelochten Scheibe (19) angeordnet ist.

3. Sähmaschine nach Anspruch 1, **dadurch gekennzeichnet, dass** das besagte magnetempfindliche Element in der besagten Verteilglocke (13) angeordnet ist.

4. Sähmaschine nach einem der Ansprüche 1 oder 2, **dadurch gekennzeichnet, dass** das besagte magnetische Element (16) in der Umfangskante (14) der besagten Verteilglocke (13) angeordnet ist.

5. Sähmaschine nach einem der Ansprüch 1 oder 2, **dadurch gekennzeichnet, dass** das besagte magnetische Element (16) innerhalb der Umfangskante (14) der besagten Verteilglocke (13) angeordnet ist.

6. Sähmaschine nach einem der Ansprüch 1 oder 2, **dadurch gekennzeichnet, dass** das besagte magnetische Element (16) bündig mit der Umfangskante (14) der besagten Verteilglocke (13) angeordnet ist.

7. Sähmaschine nach einem der vorhergehenden Ansprüche, **dadurch gekennzeichnet, dass** zwischen der besagten Verteilglocke (13) und der besagten gelochten Scheibe (19) verbindende Zentriermittel (15) angeordnet sind.

8. Sähmaschine nach Anspruch 7, **dadurch gekennzeichnet, dass** die besagten Zentriermittel (15) aus zumindest einem Stiftelement (21) und zumindest einem korrespondierenden Gehäusesitz (24) bestehen.

9. Sähmaschine nach einem der vorhergehenden Ansprüche, **dadurch gekennzeichnet, dass** die besagte Verteilglocke (13) zumindest eine Ausnehmung (17) hat.

10. Sähmaschine nach einem der vorhergehenden Ansprüche, **dadurch gekennzeichnet, dass** der besagte kleine Verteilkörper (12) zumindest einen Sitz (18) aufweist.

## Revendications

1. Machine à ensemencer de précision ayant un corps (10) constitué d'un couvercle de distribution (11), d'un petit corps de distribution (12) contenant une cloche de distribution (13) à laquelle est associé au moins un disque perforé (19), l'ensemble étant coaxial à un trou central (23) d'aspiration d'air, **caractérisée en ce que** ladite cloche de distribution (13) et ledit disque perforé (19) sont associés grâce à la coopération d'au moins un élément magnétique (16) prévu dans l'un d'entre ladite cloche de distribution (13) et ledit disque perforé (19), au moins un élément en matériau magnétosensible étant prévu dans l'autre d'entre ladite cloche de distribution (13) et ledit disque perforé (19), machine dans laquelle une garniture (25) est présente dans un bord périphérique (14) de ladite cloche de distribution rotative (13), décalé radialement vers l'intérieur par rapport audit élément magnétique (16) ou audit élément magnétosensible.

2. Machine à ensemencer selon la revendication 1, **caractérisée en ce que** ledit élément magnétique (16) est placé dans ladite cloche de distribution (13) et ledit élément magnétosensible est présent dans ledit disque perforé (19).

3. Machine à ensemencer selon la revendication 1, **caractérisée en ce que** ledit élément magnétosensible est présent dans ladite cloche de distribution (13).

4. Machine à ensemencer selon la revendication 1 ou 2, **caractérisée en ce que** ledit élément magnétique (16) est présent dans le bord périphérique (14) de ladite cloche de distribution (13).

5. Machine à ensemencer selon la revendication 1 ou 2, **caractérisée en ce que** ledit élément magnétique (16) est placé dans le bord périphérique (14) de ladite cloche de distribution (13).

6. Machine à ensemencer selon la revendication 1 ou 2, **caractérisée en ce que** ledit élément magnétique (16) affleure le bord périphérique (14) de ladite cloche de distribution (13).

7. Machine à ensemencer selon l'une quelconque des revendications précédentes, **caractérisée en ce qu'**entre ladite cloche de distribution (13) et ledit disque perforé (19) se trouvent des moyens de centrage homologues (15).

8. Machine à ensemencer selon la revendication 7, **caractérisée en ce que** lesdits moyens de centrage (15) sont constitués d'au moins un ergot (21) et d'au moins un siège réceptacle correspondant (24).

9. Machine à ensemencer selon l'une quelconque des revendications précédentes, **caractérisée en ce que** ladite cloche de distribution (13) possède au moins une entrée (17).

10. Machine à ensemencer selon l'une quelconque des revendications précédentes, **caractérisée en ce que** ledit petit corps de distribution (12) possède au moins un siège (18).
